# EUROPEAN PATENT APPLICATION

(11) **EP 3 714 997 A1**
(43) Date of publication of application: **30.09.2020**
(21) Application number: 19305424.4
(22) Date of filing: 29.03.2019
(51) Int. Cl.: B08B 1/00, B08B 1/02, B08B 3/04, B08B 3/12, B08B 17/04, H02S 40/10

(54) **PROTECTING EQUIPMENT FOR SOLAR PANELS**

(71) Applicant: Total SA, 92400 Courbevoie (FR)
(72) Inventor: FILONOVICH, Sergej, 91470 LIMOURS (FR); PENAUD, Julien, 78000 VERSAILLES (FR); SANDER, Martin, 91120 PALAISEAU (FR)
(74) Representative: Croonenbroek, Thomas Jakob

(57) **Abstract**

The present invention refers to a protecting equipment (1, 1', 1") for solar panels (5) comprising:
- a protecting transparent film (3, 3', 3") configured to be arranged in front of or on a top face (5a) of a solar panel (5),
- a mechanical device (7, 7', 7") for applying and removing the protecting film (3, 3', 3") configured for removing a soiled protecting film (3, 3', 3") and for replacing the removed soiled protecting film (3, 3', 3") with a clean protecting film (3).

## Description

### Background of the invention

The present invention refers to the protection of solar panels against soiling and dust. Indeed, the solar panels produce electrical energy from the solar energy by photovoltaïc effect. However, the accumulation of dirt on the solar panels tends to create a non-transparent layer and light diffusion leading to a significant reduction of the solar panels efficiency. This is in particular important in regions where the wind transports for example sand like in desert region and where low rain activity is registered.

In order to keep the solar panels efficient, it is therefore necessary to clean the solar panels regularly to prevent any decrease in the efficiency.

Such regular cleaning may be difficult or costly to achieve in some regions due to the lack of water or the cost of workforce, notably in desert area. Furthermore, an additional problem is the risk of damage of the solar panel during cleaning for example when wiping devices are used and when the dust lying on the solar panels comprise abrasive elements such as sand particles.

One way to overcome these drawbacks is to use coatings reducing the accumulation of soiling such as superhydrophilic or superhydrophobic coatings. However, superhydrophilic coatings cannot be used for large areas or in water scarce areas and superhydrophobic coatings are expensive and their stability over long periods such as the lifetime of the solar panels has to be proven.

Some documents disclose the use of protecting films that have to be applied on the front face of a solar panel. These films may be anti-soiling films made of polymers. However, such films also require a huge workforce to be applied and changed as ammonia/amine cleaning solutions may be required to remove a dirty film whereas the application of a new film may require a drying time of 20 to 30 minutes which is therefore very time consuming for large surfaces of solar panels.

The present invention aims therefore at overcoming the aforementioned drawbacks of the state of the art and at providing a solution to protect efficiently solar panel against dirt even in water scarce regions.

### Summary of the invention

The present invention refers to a protecting equipment for solar panels comprising:
- a protecting transparent film configured to be arranged in front of or on a top face of a solar panel,
- a mechanical device for applying and removing the protecting film configured for removing a soiled protecting film and for replacing the removed soiled protecting film with a clean protecting film.

According to another aspect of the present invention, the mechanical device is configured for removing a soiled protecting film and for replacing the removed soiled protecting film with a clean protecting film simultaneously.

According to a further aspect of the present invention, the protecting device also comprises:
- a cleaning device of the protecting film,
- the mechanical device being configured for transmitting the removed soiled protecting film to the cleaning device and for retrieving the protecting film after cleaning and for re-arranging the clean protecting film on the top face of the solar panel.

According to another aspect of the present invention, the cleaning device comprises an ultrasonic bath configured for transmitting ultrasonic waves toward the protecting film in order to remove the dirt from the protecting film.

According to a further aspect of the present invention, the cleaning device comprises a brush to remove the dust from the protecting film.

According to another embodiment of the present invention, the mechanical device comprises a first roller for rolling the removed soiled protecting film and a second roller for unrolling the clean protecting film.

According to a further embodiment of the present invention, the protecting device comprises a third roller configured to be in contact with the top face of the solar panel and paired with the second roller to arrange the clean protecting film on the top face of the solar panel, the third roller being configured to push the protecting film toward the top face of the solar panel to prevent the formation of air bubbles between the top face and the clean protecting film and to avoid dust being trapped between the clean protecting film and the top face of the solar panel.

According to another embodiment of the present invention, the mechanical device comprises a vacuum cleaner arranged between the first and the second rollers and configured for preventing dust to be introduced between the top face of the solar panel and the protecting film.

According to a further embodiment of the present invention, the mechanical device is arranged in a housing to prevent the introduction of dust within the mechanical device.

According to another embodiment of the present invention, the mechanical device comprises a first roller arranged at one end of the top face of the solar panel and a second roller arranged at a second end of the top face opposite to the first end and wherein the protecting film is outstretched between the first and the second roller in front of the top face of the solar panel.

According to another embodiment of the present invention, the protecting film is a looped protecting film and wherein the mechanical device comprises additional rollers at the ends of a bottom face of the solar panel in order to allow a scrolling of the protecting film around the solar panel.

According to another embodiment of the present invention, the cleaning device is arranged below the solar panel.

According to another embodiment of the present invention, the protecting film is made of polymer such as polycarbonate, polyethylene, polyethylene terephtalate, polyethylene naphtalate., transparent polyimide "PI", Polymethyl methacrylate "PMMA", polyvinylflouride "PVF", polyvinyl chloride "PVC".

According to another embodiment of the present invention, the thickness of the protecting film is comprised between 25 and 250 µm.

### Brief description of the drawings

[Fig.1] is a diagram of a perspective view of a solar panel with a protecting equipment according to a first embodiment;
[Fig.2] is a diagram of a side view of the solar panel and protecting equipment of fig.1;
[Fig.3] is a diagram of a top view of the solar panel and protecting equipment of fig.1;
[Fig.4] is a diagram of side view of a railway cart used to move the protecting equipment along a solar panel;
[Fig.5] is a diagram of a mobile robot used to move the protecting equipment along a solar panel;
[Fig.6] is a diagram of the protecting equipment with a vacuum cleaner;
[Fig.7] is a diagram of the protecting equipment with a cleaning device;
[Fig.8] is a diagram of a side view of a solar panel and a protecting equipment according to a second embodiment;
[Fig.9] is a diagram of a side view of a variant of the protecting equipment of fig.8;
[Fig.10] is a diagram of a sectional view of the section A-A of fig.9.
[Fig.11] is a diagram of a side view of a solar panel and a protecting equipment according to a third embodiment;

### Detailed description of the invention

The following achievements are examples. Although, the specification refers to one or several embodiments, it does not imply that each reference refers to the same embodiment or that the features apply only to a single embodiment. Simple features of different embodiments can also be combined to provide other embodiments.

The present invention refers to a protecting equipment for solar panels to prevent the solar panels from getting dirty or damaged by dust or soiling. The protecting equipment comprises a protecting transparent film configured to be arranged in front of or on a top face of a solar panel. The top face of the solar panels corresponds to the face which is facing the sun and through which the sun rays are entering the solar panels. The protecting transparent film may be a plastic film, for example a film made of polymer such as polycarbonate, polyethylene terephtalate, polyethylene naphtalate. The term transparent herein means that the protecting film is configured to let the wavelengths corresponding to the working wavelengths of the solar panel, in particular between 350 and 1500 nm, pass so that they enter the solar panels. The protecting film may have a thickness comprised in a range between 25 and 250 µm. The protecting film is designed to cover all the top face of one or several solar panels.

The protecting equipment also comprises a mechanical device for applying and removing the protecting film in order to replace automatically the protecting film when it gets dirty. The replacement of the protecting film may be scheduled at regular time intervals, for example every two weeks or may be triggered manually or by a sensor configured for determining the transparency of the protecting film. Alternatively, the replacing time may be determined based on the electric power provided by the solar panel, for example if the electric power provided by the solar panel is lower than the usual electric power with a similar weather forecast or sunshine.

In the following of the description, a protecting equipment will be associated with a single solar panel but the protecting equipment may also be applied to a series of solar panels 5, in particular to a series of adjacent solar panels 5. Preferably, the solar panels may be aligned and adjacent one another, the mechanical device being displaced along a straight line across the different solar panels.

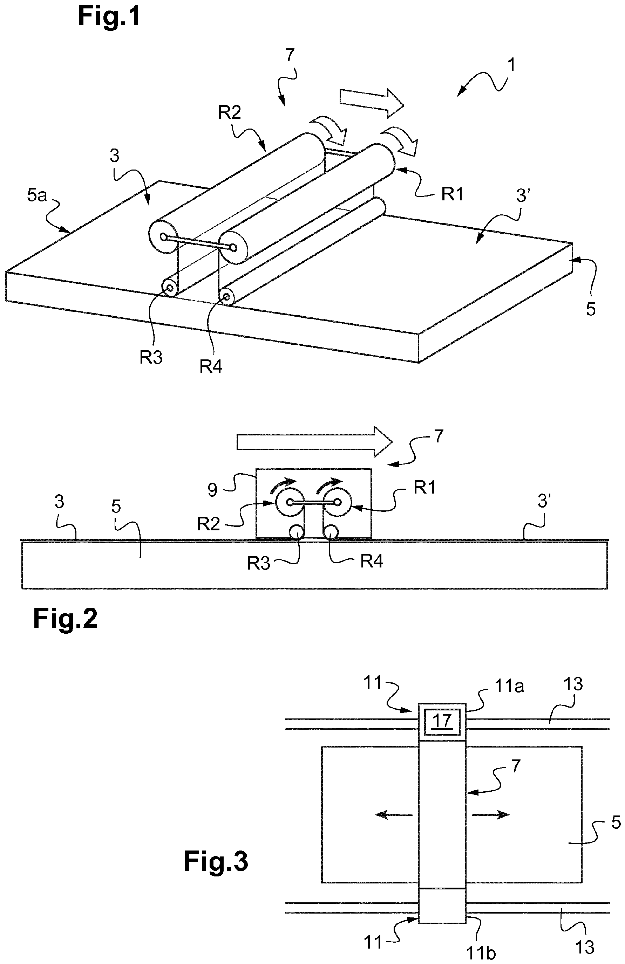

Fig.1 represents a first embodiment of a protecting equipment 1 according to the present invention. In this embodiment, the protecting film 3, 3' is adhered to the top face 5a of the solar panel 5 either with the use of an adhesive product or due to electrostatic forces. Possible adhesive materials are of acrylic type like in commercially available 3M™ Window films or Saint Gobain SolarGard® films (e.g. Safety and Security Window Film S40). Adhesion should be in the range lower or equal to 1 N/cm peel force. The reference 3' refers to a dirty or soiled protecting film that needs to be replaced and the reference 3 refers to an unused or clean protecting film.

The mechanical device 7 comprises a first roller R1 around which a soiled protecting film 3' is rolled up to be removed and a second roller R2 comprising a clean protecting film 3 which is unrolled to be applied on the top face 5a of the solar panel 5 instead of the removed soiled protecting film 3'. In the present case, the mechanical device 7 comprises a third roller R3 associated to the second roller R2 and a fourth roller R4 associated with the first roller R1. The third roller R3 is configured to come in contact with the top face 5a (only the protecting film 3 remains between the top face 5a and the third roller R3) of the solar panel 5 to apply a predetermined pressure to the applied clean protecting film 3. The third roller R3 is configured to ensure that the clean protecting film 3 is applied correctly and in particular that no air bubbles remain between the clean protecting film 3 and the top face of the solar panel 5. Indeed, the presence of air bubbles between the protecting film 3 and the top face 5a of the solar panel creates light diffusion leading therefore to a reduction of the solar panel 5 efficiency. It is therefore important to avoid such air bubbles.

The fourth roller R4 is also configured to come in contact with the top face 5a of the solar panel 5 (only the protecting film 3' remains between the top face 5a and the fourth roller R4) and is used as a guide to ease the rolling of the removed soiled protecting film 3' onto the first roller R1.

As disclosed in fig.2, in this embodiment all the rollers R1, R2, R3 and R4 are arranged in a protecting housing 9 which is also configured to prevent dust or soiling from being deposited between the top face 5a of the solar panel 5 and the clean protecting film 3 during its application. With such mechanical device 7, the application of the clean protective film 3 and the removal of the dirty protecting film 3' are achieved simultaneously. However, according to an alternate embodiment not represented herein, the first roller R1 and the second roller R2 may be independent, the mechanical device may then comprise a first part with the first roller R1 (and possibly the fourth roller R4) arranged in a first housing and a second part with the second roller R2 (and possibly the third roller R3) arranged in a second housing so that the two parts may be displaced simultaneously or one after the other. The application of the clean protecting film occurring generally just after the removal of the dirty protecting film.

The protecting equipment 1 may also be configured to remove the dirty protecting film 3' when the mechanical device 7 is displaced in one direction and to apply the clean protecting film 3 when the mechanical device 7 is displaced in the opposite direction.

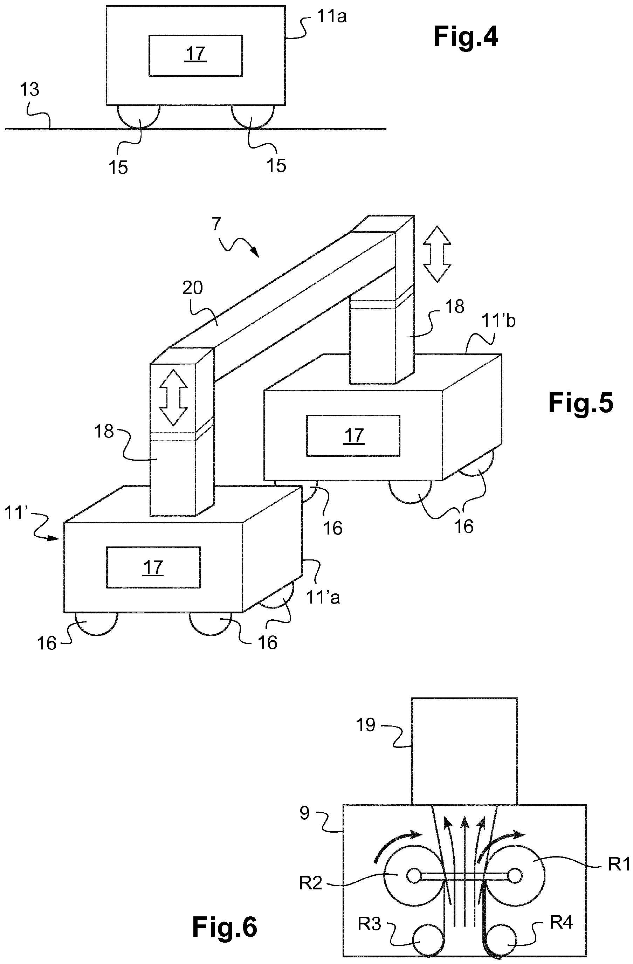

As represented in figures 3 and 4, the protecting equipment 1 also comprises a driving unit 11 configured for displacing the mechanical device 7 along the solar panel 5. The driving unit 11 may comprise two carts 11a and 11b arranged on both sides of the solar panel 5. The two carts 11a and 11b may comprises wheels 15 configured for rolling on railways 13 located on both sides of the solar panel 5. At least one of the cart may comprise an electric motor 17 configured for making the wheels 15 rotate and displace the mechanical device 7 at a predetermined speed along the solar panel 5. The rollers R1, R2 (and possibly R3 and R4) of the mechanical device 7 may also be driven by the same electric motor 17 of the driving unit 11. Alternatively, the rollers R1, R2 of the mechanical device 7 may be driven by a second electric motor. In such case, the driving speed of both motors may be coupled to ensure a good rolling of the protecting film 3 according to the speed of the mechanical device 7.

According to another embodiment represented in Fig.5, the driving unit 11' may also comprise two carts 11'a and 11'b comprising wheels 16 configured for rolling on the ground, both carts 11'a and 11'b comprising a mast 18 adjustable in height, for example telescopic mast, both masts being linked by a bed 20 on which is arranged the mechanical device 7. The height of the bed being adjusted in order to match the height of a solar panel 5. Both carts may comprise an electric motor 17, both motors 17 being paired to ensure the displacement of the protecting equipment along a solar panel 5.

Furthermore, according to another embodiment represented in fig.6, the mechanical device may also comprise a vacuum cleaner 19 arranged in the mechanical device 7 between the first roller R1 and the second roller R2 (above the rollers R1 and R2 in the present case) and configured for preventing dust to be introduced between the top face 5a of the solar panel 5 and the clean protecting film 3 by removing the particles located on the top face 5a of the solar panel 5 after the removal of the dirty protecting film 3'. Such vacuum cleaner 19 may be used to overcome the problem of external particles such as sand particles entering within the protecting housing 9.

A brush may also be used and notably in combination with the vacuum cleaner 19, the brush being configured for wiping dirt off the protecting film 3' during its removal from the top face 5a of the solar panel 5 in order to ease the cleaning of the protecting film 3'. The brush may also be used alone.

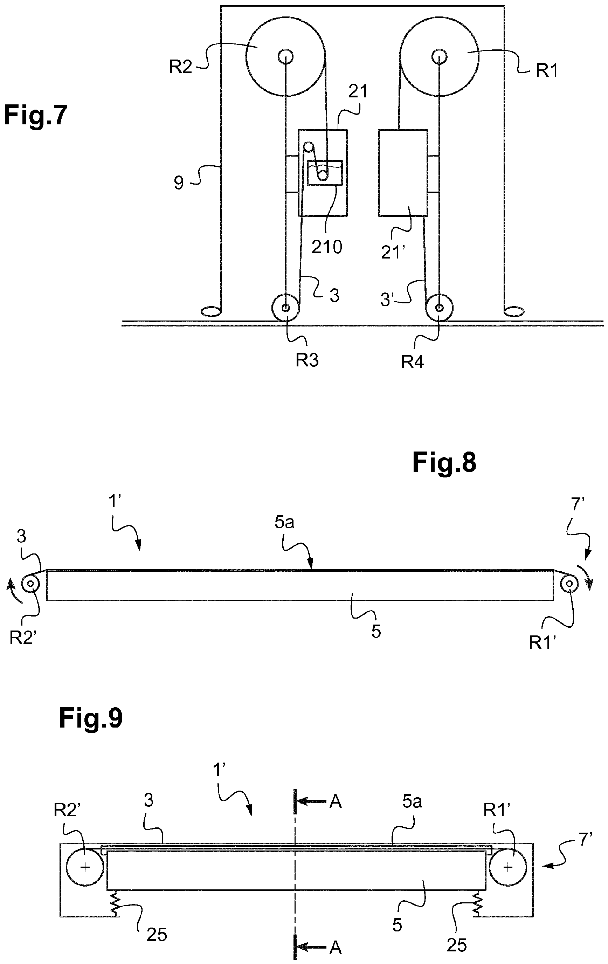

The protecting equipment 1 may also comprise a cleaning device 21' of the protecting film 3' as represented in Fig.7. The cleaning device 21' may be arranged between the first roller R1 and the fourth roller R4 and is configured for cleaning the protecting film 3' before its rolling around the first roller R1. The cleaning device 21' comprises for example an ultrasonic bath 210 (represented on the device 21 in fig.7) configured for receiving the protecting film 3' and for applying ultrasonic waves onto the protecting film 3' in order to remove the blots of the protecting film 3'. Similarly, another cleaning device 21 may be arranged between the second roller R2 and the third roller R3 so that the protecting film 3 may be cleaned just before its application on the top face 5a of the solar panel 5. The cleaning devices 21, 21' may also comprise a brush or other additional elements enabling the cleaning of the protecting film 3', 3. Furthermore, the protecting equipment 1 may be displaced in one direction to remove a dirty protecting film 3' and to apply a clean protecting film 3 and in the opposite direction at the next change of protecting film 3, 3'. When moving in the opposite direction, the dirty protecting film is rolled up around the second roller R2 and the clean protecting film is unrolled from the first roller R1 (the cleaning made by the cleaning device 21 may be done twice, once at the removal of the protecting film 3, 3' and once at the application of the protecting film 3, 3'). Alternatively, the cleaning device 21, 21' may be activated only at the removal or at the application of the protecting film 3, 3'.

When the protecting equipment 1 does not comprise any cleaning device 21, 21', the dirty protecting film 3' rolled up onto the first roller R1 may be replaced, either automatically or by an operator by another roller R1 having a rolled clean protecting film and the protecting equipment 1 may then be used in the opposite direction (the dirty protecting film being then rolled up around the second roller R2 and the clean protecting film being unrolled from the first roller R1).

According to a further embodiment represented in Fig.8, the protecting equipment 1' comprises a mechanical device 7' with a first roller R1' located on a first side of a solar panel 5 and a second roller R2' located on a second side of the solar panel 5, opposite to the first side, and the protecting film 3 is arranged between the first roller R1' and the second roller R2'. The protecting film is then simultaneously unrolled from the second roller R2' and rolled up around the first roller R1'. When the protecting film 3 is dirty and needs to be changed, a length L of protecting film corresponding approximately to the distance between the first roller R1' and the second roller R2' is rolled up around the first roller R1' (and unrolled from the second roller R2') so that a length L of clean protecting film 3 is applied on the top face 5a of the solar panel 5. When the protecting film 3 is completely unrolled from the first roller R2', the empty roller R2' may be removed and a new roller R2' wrapped with many layers of clean protecting film 3 may be placed instead of the removed roller R2' (the first roller R1' wrapped with the dirty protecting film 3 may also be removed and replaced by an empty roller R1'). The new protecting film 3 being then unrolled partially from the second roller R2' and laid down to the first roller R1'. The different steps to change the rollers R1', R2' may be achieved by an operator. The dirty protecting film 3 may be cleaned outside of the mechanical device 7 and then be reused as a clean protecting film. Such cleaning may be done with an ultrasonic bath.

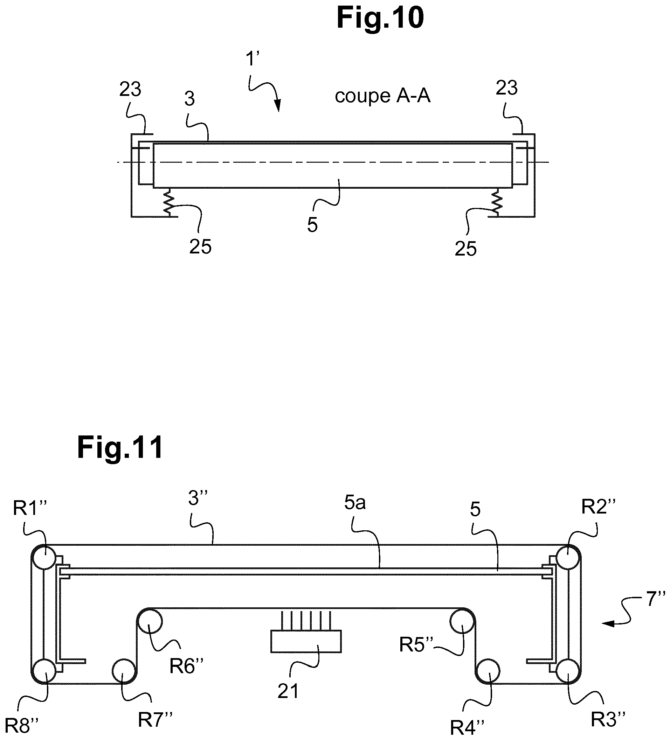

Furthermore, in order to prevent or limit the introduction of dust between the protecting film 3 and the top face 5a of the solar panel 5, slots 23 may be arranged on both sides of the solar panel 5 as represented in Fig. 9 and 10. Fig.10 is a sectional view of fig.9 along the section A-A. The slots 23 are arranged along the whole solar panel 5 between the extremities adjacent to the first roller R1' and the second roller R2'. The side edges of the protecting film 3 are therefore configured to come within the slots 23 and be displaced within the slots when the rollers R1' and R2' are rotating. Such slots 23 provides a sealing preventing dust or sand particles to get introduced between the top face 5a of the solar panel 5 and the protecting film 3.

Furthermore to ensure a good sealing between the protecting film 3 and the solar panel 5, the solar panel 5 may be mounted on elastic elements such as springs 25, said springs 25 being configured for forcing the solar panel 5 toward the protecting film 3 and therefore the protecting film 3 to come in contact with the slots 23.

With this embodiment, a cleaning device (not represented) similar to the cleaning device 21 described based on Fig.7 may also be used and arranged for example between the solar panel 5 and the second roller R2' (and/or between the first roller R1' and the solar panel 5). With such cleaning device, the protecting film 3 may be transferred from the first roller R1' to the second roller R2' and conversely.

In this embodiment, an electric motor may be used to rotate at least the first roller R1' or both rollers R1' and R2'.

According to another embodiment represented in fig.11, the protecting equipment 1" comprises a mechanical device 7" with a plurality of rollers, at least four rollers and eight rollers in the present case noted R1", R2"...R8", configured to enable an arrangement of the protecting film 3" around the solar panel 5. In this embodiment, the protecting film 3" is a looped protecting film and may be scrolled either continuously or at regular or predetermined time intervals around the solar panel 5. A cleaning device 21 which can be similar to the cleaning device 21 presented previously and comprising a brush (as represented in figure 11) and/or an ultrasonic bath may be arranged below the solar panel 5 (in front of the face opposite to the top face), the rollers R1"...R8" being arranged to drive the protecting film 3 in front or on the top face 5a of the solar panel 5 and through the cleaning device 21.

The protecting film 3 is therefore stretched in front of or against the top face 5a of the solar panel 5 and is cleaned when displaced through the cleaning device 21.

In this embodiment, an electric motor may be used to rotate at least one of the rollers R1"...R8" and preferably several rollers R1"...R8".

For the different embodiments, the replacement or displacement of the protecting film 3, 3', 3" may be achieved during day hours when the solar panel produces energy and the electric energy provided by the solar panel 5 may be used to supply power to the different active elements (motor, cleaning device...) of the protecting equipment 1, 1', 1".

## Claims

1. Protecting equipment (1, 1', 1") for solar panels (5) comprising:
- a protecting transparent film (3, 3', 3") configured to be arranged in front of or on a top face (5a) of a solar panel (5),
- a mechanical device (7, 7', 7") for applying and removing the protecting film (3, 3', 3") configured for removing a soiled protecting film (3, 3', 3") and for replacing the removed soiled protecting film (3, 3', 3") with a clean protecting film (3).

2. Protecting device (1, 1',1") in accordance with claim 1 wherein the mechanical device (7) is configured for removing a soiled protecting film (3, 3', 3") and for replacing the removed soiled protecting film (3, 3', 3") with a clean protecting film (3, 3', 3") simultaneously.

3. Protecting device (1, 1',1") in accordance with claim 1 or 2 also comprising:
- a cleaning device (21) of the protecting film (3, 3', 3"),
- the mechanical device (7, 7', 7") being configured for transmitting the removed soiled protecting film (3, 3', 3") to the cleaning device (21) and for retrieving the protecting film (3, 3', 3") after cleaning and for re-arranging the clean protecting film (3, 3', 3") on the top face (5a) of the solar panel (5).

4. Protecting device (1, 1', 1") in accordance with claim 3 wherein the cleaning device (21) comprises an ultrasonic bath (210) configured for transmitting ultrasonic waves toward the protecting film (3, 3', 3") in order to remove the dirt from the protecting film (3, 3', 3").

5. Protecting device (1, 1',1") in accordance with claim 3 or 4 wherein the cleaning device (21) comprises a brush to remove the dust from the protecting film (3, 3', 3").

6. Protecting device (1, 1',1") in accordance with one of the previous claims wherein the mechanical device (7, 7', 7") comprises a first roller (R1, R1') for rolling the removed soiled protecting film (3, 3', 3") and a second roller (R2, R2') for unrolling the clean protecting film (3, 3', 3").

7. Protecting device (1, 1', 1") in accordance with claim 4 wherein it comprises a third roller (R3) configured to be in contact with the top face (5a) of the solar panel (5) and paired with the second roller (R2) to arrange the clean protecting film (3) on the top face (5a) of the solar panel (5), the third roller (R3) being configured to push the protecting film (3) toward the top face (5a) of the solar panel (5) to prevent the formation of air bubbles between the top face (5a) and the clean protecting film (3).

8. Protecting device (1, 1', 1") in accordance with claim 6 or 7 wherein the mechanical device (7) comprises a vacuum cleaner (19) arranged between the first (R1) and the second (R2) rollers and configured for preventing dust to be introduced between the top face (5a) of the solar panel (5) and the protecting film (3).

9. Protecting device (1, 1', 1") in accordance with one of the previous claims wherein the mechanical device (7) is arranged in a housing (9) to prevent the introduction of dust within the mechanical device (7).

10. Protecting device (1, 1',1") in accordance with one of the claims 1 to 5 wherein the mechanical device (7', 7") comprises a first roller (R1', R1") arranged at one end of the top face (5a) of the solar panel (5) and a second roller (R2', R2") arranged at a second end of the top face (5a) opposite to the first end and wherein the protecting film (3, 3") is outstretched between the first (R1') and the second (R2') roller in front of the top face (5a) of the solar panel (5).

11. Protecting device (1, 1',1") in accordance with claim 10 wherein the protecting film (3, 3") is a looped protecting film (3") and wherein the mechanical device (7") comprises additional rollers (R3", R4"...R8") at the ends of a bottom face of the solar panel (5) in order to allow a scrolling of the protecting film (3") around the solar panel (5).

12. Protecting device (1, 1', 1") in accordance with claims 3 and 11 wherein the cleaning device (21) is arranged below the solar panel (5).

13. Protecting device (1, 1',1") in accordance with one of the previous claims wherein the protecting film (3, 3', 3") is made of polymer such as polycarbonate, polyethylene, polyethylene terephtalate, polyethylene naphtalate, transparent polyimide "PI", Polymethyl methacrylate "PMMA", polyvinylflouride "PVF", polyvinyl chloride "PVC".

14. Protecting device (1, 1',1") in accordance with claim 13 wherein the thickness of the protecting film (3, 3', 3") is comprised between 25 and 250 µm.
